# EUROPEAN PATENT APPLICATION

(11) **EP 4 685 617 A1**
(43) Date of publication of application: **28.01.2026**
(21) Application number: 25191901.5
(22) Date of filing: 25.07.2025
(51) Int. Cl.: G06F 3/01, G06F 3/038, G06F 3/0481, G06F 3/04815, G06F 3/04842

(54) **INTERACTION METHOD, APPARATUS, STORAGE MEDIUM AND TERMINAL DEVICE**

(30) Priority: 25.07.2024 CN 202411009861
(71) Applicant: Beijing Zitiao Network Technology Co., Ltd., Beijing 100190 (CN)
(72) Inventor: LU, Xiaochuang, 100028 Beijing (CN)
(74) Representative: Isarpatent

(57) **Abstract**

Embodiments of the present disclosure relate to an interaction method, an apparatus, a storage medium and a terminal device. And the interaction method includes: presenting at least one interactive control, where the at least one interactive control is configured with a corresponding control hot area; obtaining selection information, identifying a target interactive control hot area corresponding to the selection information, and determining a target interactive control corresponding to the target interactive control hot area; and triggering the target interactive control in response to confirmation information.

## Description

### TECHNICAL FIELD

Embodiments of the present disclosure relate to an interaction method, an apparatus, a storage medium and a terminal device.

### BACKGROUND

With the widespread popularization of extended reality (XR), virtual reality (VR), augmented reality (AR), and mobile device applications such as smartphones and tablet computers, design and interaction manners of user interaction interfaces (UIs) are facing unprecedented challenges. These diverse device platforms provide users with unprecedented immersive and portable experience, but also pose higher requirements for interaction manners.

Especially for those window interfaces with a "follow-the-head" design (Follow-the-Gaze or "follow-the-head" interface), conventional high-precision pointing interaction methods, such as an interaction mode relying on a precise ray cursor, encounter obvious problems. The conventional high-precision ray cursor interaction method is incompatible with the follow-the-head interface, which makes it difficult for users to operate accurately and the interaction efficiency is low.

### SUMMARY

Embodiments of the present disclosure provide an interaction method and an apparatus, a storage medium, a terminal device, and a program product.

An embodiment of the present disclosure provides an interaction method. The method includes: presenting at least one interactive control, where the interactive control is configured with a corresponding control hot area; obtaining selection information, identifying a target interactive control hot area corresponding to the selection information, and determining a target interactive control corresponding to the target interactive control hot area; and triggering the target interactive control in response to confirmation information.

An embodiment of the present disclosure provides an interaction apparatus, and the apparatus includes a display unit, an interaction unit and a trigger unit.

The display unit is configured to present at least one interactive control, where the interactive control is configured with a corresponding control hot area.

The interaction unit is configured to: obtain selection information, recognize a target interactive control hot area corresponding to the selection information, and determine a target interactive control corresponding to the target interactive control hot area.

The trigger unit is configured to trigger the target interactive control in response to confirmation information.

An embodiment of the present disclosure provides a computer-readable storage medium, where the computer-readable storage medium stores a computer program, and the computer program is suitable to be loaded by a computer, to perform the interaction method according to any one of the foregoing embodiments.

An embodiment of the present disclosure provides a terminal device. The terminal includes a processor and a memory, the memory stores a computer program, and the processor invokes the computer program stored in the memory, to perform the interaction method according to any one of the foregoing embodiments.

An embodiment of the present disclosure provides a computer program product, including a computer program. When the computer program is executed by a processor, the interaction method according to any one of the foregoing embodiments is implemented.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show only some embodiments of the present disclosure, and a person skilled the art may still derive other drawings from these accompanying drawings without creative efforts.
FIG. 1 is a schematic flowchart of an interaction method according to an embodiment of the present disclosure;
FIG. 2 is a schematic diagram of a first application scenario of an interaction method according to an embodiment of the present disclosure;
FIG. 3 is a schematic diagram of a second application scenario of an interaction method according to an embodiment of the present disclosure;
FIG. 4 is a schematic structural diagram of an interaction apparatus according to an embodiment of the present disclosure; and
FIG. 5 is a schematic structural diagram of a terminal device according to an embodiment of the present disclosure.

### DETAILED DESCRIPTION

The following clearly and completely describes the technical solutions in embodiments of the present disclosure with reference to the accompanying drawings in embodiments of the present disclosure. Apparently, the described embodiments are merely some rather than all of the embodiments of the present disclosure. Based on embodiments of the present disclosure, all other embodiments obtained by a person skilled in the art without creative efforts fall within the protection scope of the present disclosure.

An embodiment of the present disclosure provides an interaction method and apparatus, a computer-readable storage medium, a terminal device, a server, and a computer program product. Specifically, the interaction method in this embodiment of the present disclosure may be performed by a computer device. The computer device may be a device such as a terminal or a server. The terminal may be a device such as a smartphone, a tablet computer, a notebook computer, a desktop computer, a smart television, a smart sound box, a wearable intelligent device, an intelligent vehicle terminal, or an extended reality device. The terminal may also include a client. The server may be an independent physical server, a server cluster or distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content distribution network service, big data, and an artificial intelligence platform, but the present disclosure is not limited thereto.

Embodiments of the present disclosure may be applied to various application scenarios such as extended reality (XR), virtual reality (VR), augmented reality (AR), and mixed reality (MR).

First, some nouns or terms that appear in the process of describing embodiments of the present disclosure are explained as follows:

A virtual scene is a virtual scene that is displayed (or provided) by an application when the application is run on a terminal or a server. Optionally, the virtual scene may be a simulated environment of the real world, a semi-simulated and semi-fictional virtual environment, or a purely fictional virtual environment. The virtual scene is any one of a two-dimensional virtual scene and a three-dimensional virtual scene, and the virtual environment may be the sky, land, ocean, or the like, where the land includes environmental elements such as a desert and a city. The virtual scene is a scene in which a user controls a virtual object to complete a game logic.

The virtual object is a dynamic object that can be controlled in the virtual scene. Optionally, the dynamic object may be a virtual character, a virtual animal, an anime character, or the like. The virtual object is a character controlled by a player by using an input device, or an artificial intelligence (AI) set in a virtual environment battle through training, or a non-player character (NPC) set in a virtual scene battle. Optionally, the virtual object is a virtual character that competes in the virtual scene. Optionally, a quantity of virtual objects in the virtual scene battle is preset, or is dynamically determined based on a quantity of clients joining the battle, and this is not limited in embodiments of the present disclosure. In a possible implementation, the user can control the virtual object to move in the virtual scene, for example, control the virtual object to run, jump, crawl, and the like, and can also control the virtual object to fight against another virtual object by using skills, virtual props, and the like provided by the application. Optionally, the virtual object may alternatively be a static object that can be interacted in the virtual scene, such as a virtual article, a virtual control, an interface element, a virtual prop, or the like.

Extended Reality (XR) is a concept that includes virtual reality (VR), augmented reality (AR), and mixed reality (MR), indicates the creation of an environment in which the virtual world is connected to the real world, and a technology that the user can interact with the environment in real time.

Virtual reality (VR) is a technology for creating and experiencing a virtual world, to generate a virtual environment through calculation, and is multi-source information (virtual reality mentioned in this specification includes at least visual perception, also includes auditory perception, haptic perception, movement perception, and even gustatory perception, olfactory perception, and the like), to implement a fused, interactive three-dimensional dynamic view of the virtual environment and simulation of entity behaviors, so that users are immersed in the simulated virtual reality environment, to implement applications in a plurality of virtual environments such as maps, games, videos, education, medical, simulation, collaborative training, sales, assistance in manufacturing, and maintenance and repair.

Augmented reality (AR) is a technology that calculates, in real time, camera posture parameters of a camera in a real world (or referred to as a three-dimensional world or a real world) in an image acquisition process of the camera, and adds, based on the camera posture parameters, virtual elements to images acquired by the camera. The virtual elements include but are not limited to: images, videos, and three-dimensional models. An objective of the AR technology is to socket the virtual world onto the real world on the screen for interaction.

Mixed reality (MR) is a simulated setting that integrates a computer-created sensory input (for example, a virtual objects) with a sensory input from a physical setting or a representation thereof. In some MR settings, the computer-created sensory input is adaptive to a change in the sensory input from the physical setting. In addition, some electronic systems used to present the MR setting may monitor an orientation and/or a position relative to the physical setting, to enable the virtual object to interact with a real object (that is, a physical element from the physical setting or a representation thereof). For example, the system may monitor movement, so that a virtual plant appears to be stationary relative to a physical building.

Augmented virtuality (AV): an AV setting is a simulated setting in which a setting created by a computer or a virtual setting is incorporated into at least one sensory input from a physical setting. One or more sensory inputs from the physical setting may be a representation of at least one feature of the physical setting. For example, the virtual object may present colors of physical elements captured by one or more imaging sensors. For another example, the virtual object may present features consistent with actual weather conditions in the physical setting. For example, the features are recognized by a weather-related imaging sensor and/or recognized in online weather data. In another example, an augmented reality forest may have a virtual tree and structure, but an animal may have a feature of accurately reproducing from an image photographed for a physical animal.

A virtual field is an area that is in a virtual environment and that can be perceived by a user through a lens in a virtual reality device, and the perceived area is represented by using a field of view (FOV) of the virtual field.

An extended reality device is a terminal that implements an extended reality effect, and may be usually provided as a form of glasses, a head mount display (HMD), and contact lenses, to implement visual perception and perception in another form. Certainly, forms implemented by the extended reality device are not limited thereto, and may be further miniaturized or large-scaled.

Extended reality devices disclosed in embodiments of the present disclosure may include but are not limited to the following types:
A personal computer virtual reality (PCVR) device uses a PC to perform calculations related to virtual reality functions and data output, and the external personal computer extended reality device uses data output by the PC to achieve virtual reality effects.

A mobile extended reality device supports disposing a mobile terminal (for example, a smartphone) in various manners (for example, a head mount display equipped with a dedicated card slot), and by connecting to the mobile terminal in a wired or wireless manner, the mobile terminal performs calculations related to a virtual reality function and outputs data to the mobile extended reality device, for example, to watch a virtual reality video through an APP of the mobile terminal.

An all-in-one extended reality device has a processor for performing calculations related to virtual functions, and therefore has independent virtual reality input and output functions, and does not need to be connected to a PC or a mobile terminal, providing a high degree of freedom of use.

The following provides detailed descriptions separately. It should be noted that, a sequence of describing the following embodiments is not used a limitation on priorities of the embodiments.

Embodiments of the present disclosure provide an interaction method. The method may be performed by a terminal or a server, or may be jointly performed by a terminal and a server. In this embodiment of the present disclosure, description is provided by using an example in which the interaction method is performed by a terminal (terminal device).

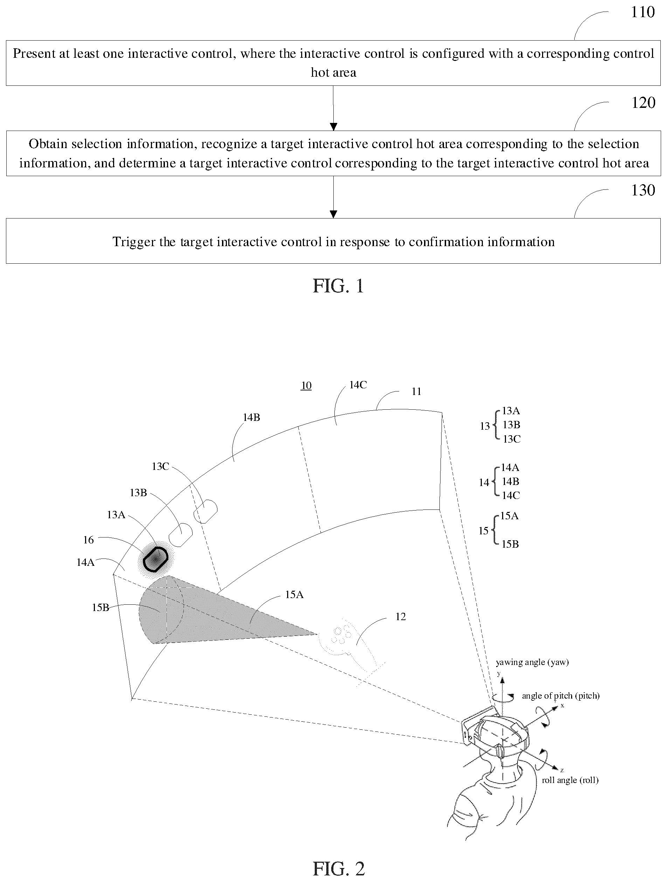

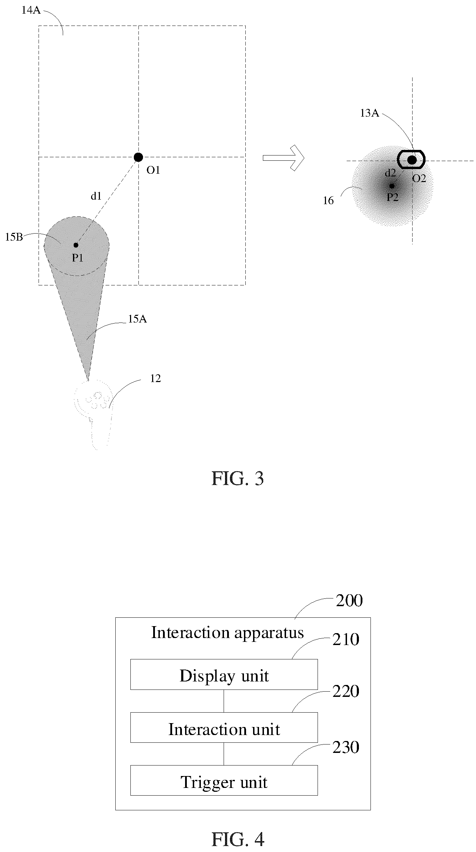

With reference to FIG. 1 to FIG. 3, FIG. 1 is a schematic flowchart of an interaction method according to an embodiment of the present disclosure, and FIG. 2 and FIG. 3 are both schematic diagrams of an application scenario of an interaction method according to an embodiment of the present disclosure. The method may be applied to a terminal device. The method includes the following steps.

Step 110: Present at least one interactive control, where the interactive control is configured with a corresponding control hot area.

For example, in an XR environment or on a screen of a mobile device, a system first needs to create and display one or more interactive controls. These controls may be a button, a slider, a menu item, a virtual object, or any other interface element that can be operated by the user, or may be a three-dimensional virtual object with a particular spatial size in the XR environment. A size, a shape, a color, and a layout of the control are considered during design, to ensure that they can be clearly visible under various illumination conditions, to facilitate recognition.

Each interactive control is associated with a corresponding control hot area. The control hot area is virtual detection area, and may be usually disposed on a visible or an invisible interaction interface, may be a range covered by the control itself, or an expanded area surrounding the control, or another area that has no overlapping area with the control and that is in the interface, so that the user can trigger the control even if without accurate aiming. The control hot area is disposed by considering fault tolerance when the user operates under different distances and angles, so that interaction is more tolerant and user-friendly.

In some embodiments, the method is applied to an extended reality device, and the method further includes: displaying extended reality content according to a position and/or a posture of the extended reality device.

For example, the extended reality content may include a three-dimensional environment generated by the extended reality device. A realistic three-dimensional environment may be constructed by using the technology of the extended reality device. The environment provides immersive experience for the user that makes the user feel like being in a real and virtual world. The three-dimensional environment generated by the extended reality device may include not only a real space environment, but also a virtual space environment. The three-dimensional environment may be a virtual reality environment or an extended reality environment. The extended reality device may have a strong graphics processing capability, to facilitate generating a high-quality three-dimensional environment in real time. This usually involves the use of advanced graphics rendering technologies such as ray tracing, shadow mapping, texture mapping, and the like, to create realistic three-dimensional scenes. To provide immersive experience, the extended reality device may also have depth perception and stereo imaging capabilities. This may be implemented by using technologies such as infrared sensors, depth cameras or LIDARs, which capture detailed information of the surrounding environment and convert it into a three-dimensional model. Head and eyeball movement of the user may also be considered when the three-dimensional environment is generated. The extended reality device may have a high-precision movement tracking function that can capture inputs such as a head posture, an eye movement, and a gesture of the user in real time, and adjust a viewpoint and details of the three-dimensional environment based on these inputs, to provide natural immersive experience. To enhance interactive experience of the user, the three-dimensional environment may also be integrated with a user interaction interface. The user interaction interface may be customized according to a requirement of an application, to provide various functions and controls, such as menus, buttons, input boxes, and the like. These interface elements may be presented in a realistic manner in the three-dimensional environment, so that the user can perform interaction intuitively.

In some embodiments, the presenting at least one interactive control, where the interactive control is configured with a corresponding control hot area includes:
presenting a plurality of interactive controls, where the plurality of interactive controls respectively correspond to a plurality of control hot areas, and a position relationship between the plurality of interactive controls corresponds to a position relationship between the plurality of control hot areas.

In some advanced and complex interaction scenarios, a plurality of interactive controls may need to be presented on the interface at the same time, and each interactive control is configured with a corresponding control hot area. In this case, to improve intuitiveness of user experience and interaction, it needs to be ensured that a correspondence between these interactive controls and their control hot areas is kept in terms of positions.

Specifically, when the system presents a plurality of interactive controls, each control has one (or more) control hot areas associated with the control. These control hot areas are effective areas in which the user interacts with the interactive controls, and may be recognized visually (for example, highlighted or framed), so as to be clearly perceived by the user, or may be invisible, and the user can learn an area of a control hot area through common sensor, habits, position correspondences, and the like.

In addition, the system may ensure that a position relationship between these interactive controls is kept consistent with a position relationship between control hot areas corresponding to the interactive controls. when a position of an interactive control on the interface changes, a control hot area corresponding to the interactive control should also have a same change, to ensure that the user can accurately select and trigger the target interactive control when attempting to interact with the control.

This correspondence between position relationships is crucial to enhancement of user experience and interaction efficiency. On one hand, it enables the user to understand the relationship between the interactive controls and the control hot areas more intuitively, to reduce the possibility of misoperation; and on the other hand, it also improves the flexibility and scalability of interaction, to enable the system to adapt to more complex and changeable application scenarios.

For example, this correspondence between position relationships may be ensured by writing corresponding interface layout and interaction logic code. For example, positions of the interactive controls and the control hot areas may be determined in a manner of absolute positioning or relative positioning, and their position information is synchronously updated when the interface is updated or changed. In addition, event listening and response mechanisms may also be used to capture an input operation of the user, and the target interactive control hot area intended to be selected by the user is determined according to position information of the operation, so as to trigger the corresponding interactive control.

For example, using application of the extended reality device as an example, a user interaction interface and a virtual interactor may be presented within a three-dimensional environment generated by the extended reality device, and a plurality of interactive controls and control hot areas corresponding to the interactive controls may be presented on the user interaction interface.

For example, as shown in FIG. 2, a three-dimensional environment 10 generated by the extended reality device is displayed, and a user interaction interface 11 is presented within the three-dimensional environment 10. The user interaction interface 11 may be fixed, for example, always located directly in front of the user. The user interaction interface 11 may alternatively dynamically change based on an action or a position of the user. For example, the user interaction interface 11 may follow the user as the user moves, or the user interaction interface 11 may move to a focus position of the user's line of sight as the user gazes somewhere. To enable the user to interact naturally with the user interaction interface 11, a virtual interactor 12 may be introduced. The virtual interactor 12 may be a virtual hand, pointer, cursor, or any other indicator, such as a virtual handle. The virtual interactor 12 may move or change according to interactive input information of the user (for example, a gesture, a head movement, and eyeball tracking) to provide an intuitive visual feedback for the user.

As shown in FIG. 2, the user interaction interface 11 has a plurality of interactive controls 13, such as a button, a slider, a switch, a virtual object, and the like, and each interactive control 13 has its own specific function and mode of operation. Each interactive control 13 has a corresponding control hot area 14. For example, an interactive control 13A (for example, a photographing button) corresponds to a control hot area 14A (for example, a photographing button hot area), an interactive control 13B (for example, a video recording button) corresponds to a control hot area 14B (for example, a video recording button hot area), and an interactive control 13C (for example, a panoramic button) corresponds to a control hot area 14C (for example, a panoramic button hot area).

For example, the control hot area 14 is an area that the user needs to point to precisely to trigger the corresponding interactive control 13. A visual representation (for example, the area) of the control hot area 14 may be much greater than a visual representation (for example, the area) of the interactive control 13 itself, to ensure that the control can also be effectively triggered even if the user's aiming is not precise enough.

When the system presents a plurality of interactive controls, configuring one or more control hot areas for each control is intended to increase the flexibility and fault tolerance of the interaction. In some scenarios, configuring a plurality of hot areas for a control can better adapt to different user behaviors and use environments.

For example, in an extended reality (XR) application, a same virtual object (interactive control) may have a plurality of hot areas, and different hot areas respectively correspond to different interaction manners. For example, a virtual door handle may have a hot area for gripping, another hot area for pushing, and even a hot area for rotation. In this way, the user can interact with an object in a virtual environment more intuitively, just like in a real world.

For example, in an XR environment in which multi-user cooperation is required, a same control may have different hot areas for different users, and different hot areas respectively correspond to different users. For example, a shared virtual whiteboard may have a unique hot area for each participant. In this way, the system can distinguish who is operating, and attribute an operation to a correct user. This is particularly important in a multi-participant conference or an educational environment, so that interaction accuracy and order can be ensured.

For example, using application of the extended reality device as an example, a position of the user interaction interface may be dynamically adjusted according to head posture information of the target object. For example, the target object may be a user that experiences immersive experience currently by using the extended reality device.

In some cases, the user interaction interface does not dynamically adjust the position of the user interaction interface according to the head posture information of the user, but displays a fixed position in a display interface of a head-mounted device of the user. In this way, regardless of how the user moves the head, the user interaction interface always keeps the fixed position within the user's line of sight, to provide more natural and comfortable interactive experience.

For example, when a plurality of interactive controls and corresponding control hot areas are configured, the configuration may be performed in a particular preset sequence (for example, from left to right, from up to bottom, a Z-shaped sequence, an annular sequence, or a mesh layout sequence). This sequence may help the user find and recognize each control more quickly, to improve interaction efficiency and accuracy.

To make the user select an interactive control more easily, a control hot area corresponding to the interactive control needs to be sufficiently big, and the control hot area does not need to strictly include the corresponding interactive control, provided that a sequence of the interactive control is in one-to-one correspondence with a sequence of the control hot area.

In some embodiments, adjacent control hot areas are seamlessly connected.

To improve user experience, the adjacent control hot areas are designed to be seamlessly connected, to form a continuous interaction area, reduce a positioning difficulty when the user switches between different controls, and avoid misoperation caused by a space gap when the user operates, thereby ensuring that an intention of the user can be accurately recognized even if during a quick and continuous operation.

In some embodiments, the at least one interactive control has an overlapping area with a control hot area which does not correspond to the at least one interactive control; or the at least one interactive control has no overlapping area with a control hot area which corresponds to the at least one interactive control.

Generally, each interactive control (for example, a control A) has a corresponding control hot area (for example, a hot area of the control A). This design ensures intuitiveness and accuracy of user interaction, because when tapping or touching a control hot area, the user actually operates an interactive control corresponding to the control hot area.

In some special designs, the control may exceed a boundary of the hot area of the control, but this exceeding is usually for visual aesthetics or animation effects, and does not mean that the exceeding part is also used as the hot area. In an actual interaction logic, the boundary of the hot area should still be used as a standard.

As shown in FIG. 2, the user interaction interface 11 has a plurality of interactive controls 13, such as a button, a slider, a switch, a virtual object, and the like, and each interactive control 13 has its own specific function and mode of operation. Each interactive control 13 has a corresponding control hot area 14. For example, an interactive control 13A (for example, a photographing button) corresponds to a control hot area 14A (for example, a photographing button hot area), an interactive control 13B (for example, a video recording button) corresponds to a control hot area 14B (for example, a video recording button hot area), and an interactive control 13C (for example, a panoramic button) corresponds to a control hot area 14C (for example, a panoramic button hot area). For example, the interactive control 13B (for example, the video recording button) has an overlapping area with the control hot area 14A (for example, the photographing button hot area) not corresponding to the interactive control 13B. For example, the interactive control 13B (for example, the video recording button) has no overlapping area with the control hot area 14B (for example, the video recording button hot area) not corresponding to the interactive control 13B.

In some embodiments, an area of the control hot area is more than four times larger than an area of the interactive control corresponding to the control hot area.

In some embodiments of interactive designs, an area of the control hot area is set to be far greater than an area of the interactive control corresponding to the control hot area. For example, the area of the control hot area may be set to be more than four times larger than the area of the interactive control, but this is not the upper limit. In some specific scenarios, the area of the control hot area can even reach more than 5 times, 6 times, 8 times, and more than10 times larger than the area of the interactive control, and this depends on features of application requirements.

For example, the area of the control hot area may be more than four times larger than the area of the interactive control corresponding to the control hot area. This provides large operation space for the user, and reduces the possibility of touch by accident.

For example, in some applications, to further enhance interaction fault tolerance, the area of the control hot area may be set to be 6 to 8 times of the area of the interactive control. This is particularly useful in a scenario in which elements of the user interface are dense or the operation of the user is insufficiently accurate.

For example, for an application requiring extremely high error tolerance, the area of the control hot area may even be expanded to more than 10 times larger than the area of the interactive control.

In addition, the size increase of the control hot area is not only reflected in the area, but also implemented by extending a length or a width of the control hot area. For example, in a horizontal or vertical direction, the length or the width of the control hot area may be designed to be twice, three times, and even four times or more of that of the interactive control.

For example, in some layouts, to adapt to long-distance sliding or dragging operations of the user, the control hot area may be expanded forward or backward in the length direction. For example, a length of a hot area of a button (for example, a slider) may be several times (for example, twice, three times, and even four times or more) of an actual length of the button itself, so that the user can trigger the button when starting to slide from a far position.

For example, in some layouts, the width of the control hot area may significantly exceed the width of the interactive control itself, to ensure that the user can accurately trigger interaction at different angles. For example, for a tap control such as a button or an icon, the control hot area may be expanded in the width direction, to ensure that a finger of the user can trigger operation during tapping even if the finger is not completely aligned with a center of the control. This design is suitable for a device with a small screen size or on which user operation is insufficiently accurate.

For example, in some layouts, the control hot area may be expanded in both the length and width directions non-uniformly. For example, according to user interaction habits or interface layout requirements, the control hot area may be expanded more on one side that the user may touch more (for example, below or on the right side of the button), to improve interaction comfort and accuracy. For example, according to user operation habits or interface layout requirements, the control hot area may be enlarged more in the length direction, but keep a relatively small size in the width direction, to adapt to a specific interaction scenario.

A larger areal extent of a hot area means that the user may have bigger fault tolerant space during touching or tapping of the user. Even if their fingers or cursors are not accurately aligned with a center of the control hot area, the system can accurately recognize the intention of the user, to improve fault tolerance and user experience of the interaction.

Interaction manners and habits of the user may be different on different devices and screen sizes. A larger areal extent of a hot area can better adapt to these differences, to ensure that the user can easily complete the interaction operation in various cases.

Enlarging the areal extent of a hot area can visually guide the user to notice a key interactive control, thereby improving availability of the interface and operation efficiency of the user. In particular, this design can reduce cognitive burden of the user in complex or information intensive interfaces.

In some embodiments, a center of the interactive control does not overlap a center of the control hot area corresponding to the interactive control.

In some cases, to highlight a specific part of the interactive control or draw attention of the user, the center of the hot area may be configured to shift to a position outside the control. In this way, comparison and layering can be formed visually, and arrangement of the interactive control may be more flexible and more aesthetic, to ensure that the user can accurately trigger the control without being affected by control precision.

In some specific interaction modes, such as sliding and dragging, shifting the center of the hot area to a position outside the control can better match an operation habit of the user. For example, in an interface of sliding to unlock, a hot area of an unlocking slider may be slightly biased to one side of a sliding direction, so that the user can complete a sliding action more naturally.

When an interface layout is limited or a specific aesthetic effect needs to be pursued, a designer may adjust a position of the center of the hot area to optimize the layout and the overall visual effect of the control. This adjustment is usually performed on the premise of ensuring that the user can easily trigger the control.

In some applications, special processing may need to be performed on a specific interactive control, for example, an areal extent of a hot area is disposed to response to a complex gesture or operation of the user. In this case, shifting the center of the hot area to a position outside the control can better meet these special requirements.

In some embodiments, a size and/or a position of the control hot area corresponding to each interactive control is determined according to head posture information of a target object.

For example, according to the head posture information of the user, the size and/or position of each control hot area may be dynamically adjusted. For example, when the head of the user faces a particular direction, a control hot area in this direction may be enlarged, to facilitate triggering by the user.

In some embodiments, sizes and/or positions of the control hot areas corresponding to the interactive controls are determined according to the control quantity of the interactive controls.

For example, the size and/or the position of the control hot area corresponding to each interactive control may be dynamically adjusted according to the control quantity of the plurality of interactive controls. For example, when the quantity of controls on the user interaction interface is large, the size of the control hot area corresponding to each interactive control may be properly reduced, and the position of the control hot area on the user interaction interface is properly adjusted, to avoid excessive crowdness between hot areas; and conversely, when the control quantity is excessively small, the size of the control hot area corresponding to each interactive control may be enlarged, and the position of the control hot area on the user interaction interface is properly adjusted, to improve fault tolerance of the interaction.

In some embodiments, a size and/or a position of the control hot area corresponding to each interactive control is determined according to a historical operation frequency of a target object for each interactive control.

For example, the size and/or the position of the corresponding control hot area may be dynamically adjusted according to the historical operation frequency of the user for each interactive control. For example, for an interactive control usually used by the user, the control hot area of the interactive control may be enlarged or moved to a position at which triggering is easier; and for an interactive control rarely used, the control hot area of the interactive control may be reduced or moved to a position that is relatively secondary. In this way, a frequently used interactive control is easier for access, to optimize user experience individually, thereby improving interaction efficiency

In some embodiments, a position of the control hot area does not change.

For example, the control hot area does not change in response to a position change of a head-mounted display device, and a position of the control hot area on a display screen of the head-mounted display device does not change.

The fixed position of the control hot area can ensure that the user has consistent experience in the interaction process. Regardless of how the user moves the head-mounted display device, the position of the control hot area always keeps unchanged, so that the user can form a stable interaction expectation, thereby reducing confusions and misoperations brought by position changes.

The fixed hot area position simplifies an interaction logic of the system. There is no need to track the position change of the head-mounted device in real time to adjust the hot area position according to the change, so that complexity and computing burden of the system are reduced.

By fixing the position of the control hot area, the system can provide an intuitive visual feedback and interaction prompt more easily. The user does not need to search for a changed hot area position when moving the head-mounted device, to improve interaction efficiency and comfort.

For example, in an application of a mobile terminal such as a mobile phone, that the position of the control hot area does not change usually means that positions of response areas of some interactive elements (for example, a button, a link, and a slider) in the user interface on the screen are fixed, and do not change with an operation (such as screen sliding or view scaling) of the user.

For example, it is assumed that the user is using a music player application on the mobile phone. There is a play/pause button on a music play interface. The button has a corresponding control hot area. The user may control play and pause of music by tapping the hot area. When the user holds the mobile phone to rotate or move, other elements (such as a song list and a play progress bar) of the music play interface may be rearranged or adjust positions with rotation of the mobile phone, but the position of the control hot area of the play/pause button always keeps unchanged. Regardless of how the user moves the mobile phone, provided that their fingers tap within a hot area range of the play/pause button, the user can accurately recognize the intention of the user, and perform a corresponding play or pause operation.

When the position of the control hot area does not change, the extended reality content may be displayed according to the position and/or the posture of the extended reality device (such as a virtual reality head-mounted display device or augmented reality glasses), and fixation of the control hot area is kept at the same time.

For example, using an information panel (an interactive control) in a virtual reality environment as an example, the user wears a virtual reality head-mounted display device and enters a virtual office environment. There is a fixed information panel for displaying information such as date, time, weather, and a to-do list. The information panel has a control hot area corresponding to the information panel, and the control hot area is used for triggering some operations, such as refreshing information or expanding more details. The position of the control hot area corresponding to the information panel is fixed in the virtual environment, and does not change with movement of the user or a position change of the head-mounted display device. This means that regardless of how the user rotates the head or moves the body, provided that their lines of sight or fingers (when the interaction is gesture interaction) fall within the hot area, the system can accurately recognize and respond to a corresponding operation.

Although the position of the control hot area is fixed, other extended reality content (such as an office layout, furniture, and a virtual body of a colleague) in the virtual office environment is dynamically displayed according to the position and the posture of the head-mounted display device. For example, when the user turns around, a virtual wall and furniture behind the user correspondingly appear in the field of vision; and when the user approaches to the virtual body of the colleague, the user can see more detailed facial expressions and actions. The user may explore the virtual environment through head movement, and also interact with the control hot area with the fixed position through line-of-sight tracking or gesture recognition. For example, the user only needs to simply retain lines of sight on a hot area of a refreshing button, and refresh information on the information panel by pressing a button on a controller or making a specific gesture.

Fixation of the control hot area provides a stable interaction anchor for the user, and dynamic display of the extended reality content enhances immersiveness and interaction naturalness. This combination enables the user to enjoy highly immersive experience and easily perform necessary operations and control at the same.

In some embodiments, a display position of the interactive control does not change.

For example, the interactive control does not change in response to a position change of the head-mounted display device, and a display position of the interactive control on a display screen of the head-mounted display device does not change.

The fixed display position of the interactive control can reduce visual interference of the user in the interaction process. The user does not need to frequently adjust a viewpoint to search for a moving control, so that the user can be more focused on a current operation task.

The fixed control display position helps keep stability of the interface layout. Regardless of how the user moves the head-mounted display device, the interface layout remains unchanged. This enables the user to adapt to and be familiar with an interface environment more quickly.

In a process of using the head-mounted display device in a long term, the user may form a habitual memory for a specific control position. The fixed control display position helps maintain this memory, to reduce cognitive burden of the user in the interaction process.

In some application scenarios in which a plurality of tasks need to be processed at the same time, the fixed control display position helps the user quickly switch between different tasks. The user does not need to search for a moving control again, to improve efficiency of multi-task processing.

For example, in an application of a mobile terminal such as a mobile phone, that the position of the interactive control does not change usually means that positions of interactive elements (for example, an input box, a switch button, and a menu item) on the screen of the mobile phone keep unchanged in an operation process of the user, even if other elements (such as a background picture and a list item) change.

For example, it is assumed that the user is operating a news post page of a social media application. There is a "post" button on this page, and the button is located at a bottom center position of the screen. Regardless of whether the user is editing text, selecting a picture, adding a tag, or adjusting privacy settings, a display position of the "post" button always keeps unchanged. In this way, after the user completes editing and prepares to post, they can immediately find and tap the "post" button and do not need to search around on the screen. In addition, even if the user accidentally slides the screen in the editing process, causing a position of other content (such as a preview image, a text input box, and the like) to change, the display position of the "post" button keeps unchanged, providing stable and intuitive interactive experience for the user.

The extended reality content may be displayed based on the position and/or the posture of the extended reality device when the display position of the interactive control does not change, and the interactive control on the interface keeps stability of the display position of the interactive control.

For example, using an augmented reality navigation application (the interactive control) as an example, the user is using an augmented reality navigation application that superimposes navigation information on a real-world view of the user. An interface includes several key interactive controls, such as a navigation start button and a slider for adjusting a viewpoint, and display positions of these controls on the screen are fixed. In this application, all the interactive controls are designed at fixed positions on the screen. For example, the navigation start button may be located on the bottom right corner of the screen, and the slider for adjusting a viewpoint is located at top center of the screen. Regardless of how the user moves or rotates the augmented reality device, the display positions of these controls keep unchanged on the screen of the device.

For example, when the user walks outdoors holding the augmented reality device, the device tracks a position, an orientation, and a movement speed of the user in real time. Based on the information, the application dynamically superimposes extended reality content such as a navigation arrow, a distance indication, and a destination marker in the real-world view of the user. The navigation information is updated according to an actual position and orientation of the user, to ensure that the user can clearly see a direction that the user should go next. In addition, interactive controls on the interface (such as the navigation start button) keep stability of the display positions of the interactive controls, to facilitate the user in quickly triggering a corresponding operation when necessary. The user does not need to search for a position of a control again during movement, to improve interaction efficiency and security.

Fixation of the display positions of the interactive controls enable the user to conveniently access and control the interactive controls in the application when enjoying immersive navigation experience.

Step 120: Obtain selection information, recognize a target interactive control hot area corresponding to the selection information, and determine a target interactive control corresponding to the target interactive control hot area.

For example, the system needs to monitor a selection action of the user in real time, and the selection action may include but is not limited to eye tracking, gesture recognition, a touchscreen input, a speech command, or a head posture. Selection information a signal indicating an intention of the user to operate a specific control, and may be eyesight retainment, finger pointing, a specific gesture, or a verbal instruction.

After capturing the selection information, the system analyses and determines which control hot area best matches the information. This usually relates to calculating a relationship between a position or a direction of the selection information and each control hot area, to find a control hot area with a highest degree of overlapping. Once the target interactive control hot area is recognized, the target interactive control that the user wants to operate can be determined. This process may also include some intelligent predictions. For example, when the user gazes at a specific area for a long time, the system may anticipate a selection of the user, thereby accelerating response.

For example, the extended reality device constantly listens and obtains interactive input information of the user. This interactive input information may come from various sensors (such as movement tracking, eye tracking, gesture recognition, and sound recognition) or may be obtained through input devices of the XR device (such as real interactors like a handle and a touchpad).

The extended reality device continuously monitors actions, gestures, head movements, eyeball movements, and speech instructions of the user by using sensors (such as a gyroscope, an accelerometer, a touchpad, and a camera), and converts the information into processable interactive input information in real time. For gesture-based interaction, a complex gesture recognition algorithm is further required to distinguish between different gesture meanings. For a speech input, a natural language processing technology is required for understanding a command of the user. The interactive input information may include selection information and confirmation information.

In some embodiments, the obtaining selection information includes:
obtaining the selection information based on a multimodal input manner, where the multimodal input manner includes at least one selected from the group consisting of: a head posture input manner, an eye movement input manner, a gesture input manner, a speech input manner, and a real interactor input manner.

The head posture input manner is implemented by using a built-in inertial sensor such as a gyroscope, an accelerometer, or a magnetometer, so that the extended reality device can track head posture information such as rotation and inclination of the head of the user in real time, and conversion is used as an interactive instruction, so that the user can browse the virtual world through natural head movement. This head posture input manner is particularly important for navigation and viewpoint conversion, and provides immersive visual experience for the user. For example, the user only needs to turn the head to view the surrounding virtual environment. This is as natural as in the real world.

The eye movement input manner is a manner in which an eye tracking technology monitors eyeball movement of the user by using a dedicated camera or a sensor, including a gaze point position, a pupil diameter change, and the like. This not only can be used to achieve a more real disparity effect and enhance immersiveness, but also can be used as an interaction means. For example, the user can select an interactive control corresponding to a control hot area by focusing lines of sight on the control hot area. This provides an interaction manner without manual operation for the user, and is particularly suitable for a scenario requiring quick response or high-precision selection.

The gesture input manner is a manner in which a gesture recognition technology usually recognizes a gesture action of the user in combination with a depth sensor and a complex algorithm. A specific gesture instruction, such as tapping, grabbing, releasing, scaling, and sliding, can be parsed out by analyzing a position of a finger joint, a palm shape, and a hand movement trajectory. This enables the user to make a natural gesture in the air to interact with the user interaction interface, greatly enhancing intuitiveness and degree of freedom of the interaction.

The speech input manner is a manner in which an integrated microphone array and an advanced natural language processing (NLP) technology enable the extended reality device to capture and understand a speech instruction of the user, and convert the speech instruction of the user into an executable operation. From simple menu selection to complex task execution, the speech input provides a convenient and efficient interaction way for the user. The extended reality device needs to have noise filtering, speech recognition, and semantic comprehension capabilities, to ensure that the extended reality device can accurately respond to a speech command of the user in a plurality of environments.

For the real interactor input manner, in addition to the foregoing natural interaction manners, the XR device is usually further configured with a handle, a touchpad, or another form of real interactor as an auxiliary or alternative input means. Sensors built in these devices (such as a touch sensor and a force feedback mechanism) can capture fine actions of the user such as pressing, touching, and waving, to provide real interactor input manners for interaction scenarios.

In actual application, the extended reality device often does not use any of the foregoing input manners alone, but may comprehensively use multimodal input information, which is fused and processed by intelligent algorithms to improve accuracy and richness of the interaction. For example, more delicate visual focus control is implemented by combining a head posture and eye tracking, or gesture recognition is combined with a speech command, to implement more efficient task execution. This multimodal fusion strategy greatly expands interaction possibilities, bringing smoother, more natural and powerful XR experience to the user.

Then, the target interactive control hot area corresponding to the selection information is recognized, and the target interactive control corresponding to the target interactive control hot area is determined.

For example, the extended reality device analyzes the obtained selection information and determines, by using an algorithm, the target interactive control hot area that the user is intended to point to. Once the target interactive control hot area that the user wants to select is recognized, the corresponding target interactive control can be determined.

For example, as shown in FIG. 2, when the target interactive control hot area corresponding to the selection information is recognized as the control hot area 14A, the target interactive control corresponding to the target interactive control hot area is determined as 13A.

First, the multimodal input manner means that the device can simultaneously receive and process information from different input sources, such as line-of-sight tracking, a head gesture, gesture recognition, a voice command, and a body action. In step 120, the device needs to use the selection information generated by these multimodal input manners to accurately determine the target interactive control hot area that the user wants to select.

Line-of-sight tracking: the line-of-sight tracking technology can track a line-of-sight direction of the user in real time. When the user gazes at an interactive control or control hot area, the device may capture this information and use it as an important basis for determining the intention of the user. Line-of-sight tracking data may be combined with other input data (such as a gesture), to provide more accurate interactive control.

Head posture: a small rotation of the head of the user may be used as a key indicator for determining the intention of the user (a direction of attention of the user). By continuously tracking these subtle changes, a screen area being focused by the user can be recognized.

Gesture recognition: a gesture recognition technology can parse hand actions and gestures of the user, to recognize the intention of the user. For example, the user may interact with interactive controls in the user interaction interface through pointing, tapping, pinching, and other gestures. The gesture recognition technology may be used in combination with the line-of-sight tracking technology, to provide a more natural and intuitive interaction manner.

Speech command: in some cases, the user may expect to use speech commands to interact with the device. The device needs to be able to recognize and parse a speech input of the user and convert it into a corresponding control instruction. Although the speech command may not be a direct means for determining the target interactive control hot area in step 120, the speech command may be used as an auxiliary input manner to enhance flexibility and convenience of the interaction.

Body action: the body action may also be used as one of the input manners, especially in the XR system for full-body tracking. The body action of the user may be captured and parsed into a control instruction, to implement richer interactive experience.

For example, it is assumed that the user is browsing a virtual shop using an extended reality device and expects to purchase a commodity. There are a plurality commodity pictures and buy buttons (interactive controls) corresponding to the commodity pictures on a shop interface (the user interaction interface). To buy a particular commodity, the user may perform the following actions: the user first focuses lines of sight on a picture of a target commodity by using a line-of-sight tracking technology, to indicate focus on the commodity. Next, the user may extend his or her arm and use a gesture (such as pinching or tapping) to point to a corresponding buy button or a control hot area corresponding to the buy button. The device captures and parses this gesture by using the gesture recognition technology, to determine the target interactive control hot area that the user wants to select. When the gesture of the user is sufficiently explicit or when the device requires more accurate inputs to confirm the intention of the user, the user may also use another input manner (such as a speech command) to assist in determining. For example, the user may say a speech command "buy this commodity" to confirm selection. Once the device recognizes the target interactive control hot area that the user wants to select, the device can determine the corresponding target interactive control (that is, the buy button), and perform a corresponding operation (such as adding a commodity to a shopping cart or jumping to a payment interface). In this way, the device can take full advantage of the multimodal input manners, to provide more natural, intuitive and flexible interactive experience.

For example, it is assumed that in the extended reality environment, a service agreement window pops up in front of the user, where the window includes two option buttons: "agree" and "disagree". A selection of the user may be recognized through fusion of the following multimodal inputs:

Example of a multimodal input manner combining eye tracking and gesture confirmation: the user's eyes are slightly tilted to the left, and the extended reality device recognizes, by using the eye tracking technology, that the user's lines of sight are focused on the control hot area corresponding to the "agree" option button, which is a preliminary indication of the intention of the user. Subsequently, the user performs a gesture confirmation operation, such as finger pinching, finger tapping, interactor tapping, or another tapping manner, where the tracking and gesture confirmation changes together constitute a confirmation of the selection of the user. By combining information from two modal input dimensions: eye tracking and gesture confirmation, it is accurately recognized that the user is intended to select the "agree" option button and a corresponding response is made.

Example of a multimodal input manner combining a head gesture and gesture confirmation: the user's head is slightly tilted to the left, and this change of the head gesture is captured and analyzed by the extended reality device, and it is confirmed that the direction of the user's attention points to the "agree" option button. Subsequently, the user performs a gesture confirmation operation, where the head posture and gesture confirmation changes together constitute a confirmation of the selection of the user. By combining information from two modal input dimensions: the head posture and gesture confirmation, it is accurately determined that the user selects the "agree" option button, and a corresponding operation is performed.

Example of a multimodal input manner combining eye tracking, the head posture, and gesture confirmation: the user's eyes are slightly tilted to the left, and the extended reality device recognizes, by using the eye tracking technology, that the user's lines of sight are focused on the control hot area corresponding to the "agree" option button, which is a preliminary indication of the intention of the user. The user's head is slightly tilted to the left, and this change of the head gesture is captured and analyzed by the extended reality device, and it is further confirmed that the direction of the user's attention points to the "agree" option button. Subsequently, the user performs a gesture confirmation operation, where eye tracking, the head posture, and gesture confirmation changes together constitute a confirmation of the selection of the user. By combining information from three modal input dimensions: eye tracking, the head posture, and gesture confirmation, the extended reality device accurately recognizes that the user is intended to select the "agree" option button.

Then, the "agree" option button may be highlighted. In some embodiments, this may also be accompanied by slight tactile feedback or an audio prompt, to confirm the operation of the user. This process is fast and natural, greatly enhancing interactive experience and efficiency of the user in the extended reality environment.

In some embodiments, the method further includes:
displaying a visual indication corresponding to the selection information, where the visual indication is used for providing a visual feedback indicating an area range corresponding to the selection information.

For example, to give the user clear feedback, the extended reality device displays a visual indication pointing from a virtual interactor to the target interactive control hot area, where the visual indication is used for providing visual feedback indicating an area range corresponding to the selection information.

In some embodiments, the visual indication includes any one or a combination of the following: a ranged short ray; a virtual cursor; and a virtual marker indicating an area range.

In order to make user interaction in the user interaction interface more intuitive, flexible and varied visual indications are displayed according to different scenarios and user requirements. For example, when the target interactive control hot area corresponding to the selection information in the interactive input information is recognized, a visual indication corresponding to the selection information is displayed, where the visual indication may be presented as:
Ranged short ray: this indication manner is usually used for precise pointing, for example, a short ray is emitted from a virtual interactor (for example, a virtual handle or a virtual hand) to point to the control hot area of the target interactive control. A color and a thickness of the short ray may be adjusted according to context. For example, soft blue is used to indicate an interactive state and a red warning indicates an inoperable state, to quickly direct the user's attention in complex scenarios.

Virtual cursor: it may be a floating icon, a pointer or a dynamic graphic that is highly synchronized with the action of the user. In design, the transparency, size, and shape of the virtual cursor all need to be elaborately considered, to ensure that it is clearly visible from any viewpoint, without obscuring important background information. The virtual cursor may move following the user's line of sight or gesture, to visually indicate a current focus.

Virtual marker indicating the area range: the marker such as a bounding box or an icon is displayed around the target interactive control hot area, to clearly define an operation range.

As shown in FIG. 2, a short ray 15A is emitted from a virtual interactor 12 (such as a virtual handle), and points to the target interactive control hot area 14A corresponding to the target interactive control 13A, and a virtual cursor 15B is displayed at a current focus on the target interactive control hot area 14A indicated at an end of the short ray 15A, and a visual indication 15 is formed by the short ray 15A and the virtual cursor 15B.

In some embodiments, the method further includes:
displaying interaction feedback information corresponding to the target interactive control, where a position of the interaction feedback information relative to the target interactive control is determined according to a position of the selection information relative to the target interactive control hot area.

For example, when the user interacts with a particular target interactive control (such as a button, a slider, or an input box), the system not only performs a corresponding operation, but also displays interaction feedback information related to the interaction, to enhance user experience and enable the user to learn an operation result.

When the user selects the target interactive control through a mouse, touch, or another input device, the system generates and displays a piece of interaction feedback information. A position of the feedback information is not fixed, but is determined based on a position of the selection information relative to the target interactive control hot area.

For example, when the user performs a selection operation on the left side of the target interactive control hot area, the interaction feedback information may be displayed on the left side of the target interactive control. In this way, the user can see operation feedback more intuitively, to improve user experience.

In some embodiments, the position of the interaction feedback information relative to the target interactive control is determined according to a ratio relationship of a distance between the selection information and a center of the target interactive control hot area.

For example, a center point of the target interactive control hot area is first determined. Then, a distance between the selection information (for example, a mouse click point) and the center point is calculated. Then, the position of the feedback information is determined according to a ratio relationship between the distance and a size of the hot area.

For example, when the user performs a selection operation at the center of the target interactive control hot area, the interaction feedback information may be displayed at a center of the target interactive control. When the user performs a selection operation on an edge of the target interactive control hot area, the interaction feedback information may be displayed on an edge of the target interactive control. In this way, the position of the interaction feedback information may be dynamically adjusted according to an operation of the user, so that the user interface is more flexible and personalized.

In some embodiments, the interaction feedback information includes at least one selected from the group consisting of visual feedback information, tactile feedback information, and auditory feedback information.

The interaction feedback information corresponding to the target interactive control is output, where the interaction feedback information is designed to provide an instant and clear response, to enhance the user's confidence and satisfaction with the operation. This includes but is not limited to:

Visual feedback information: changes in the appearance of the target interactive control, such as a peripheral highlighted iris or an internal dynamic effect (a color gradient or a pattern animation), as well as more complex animation effect views such as scaling, rotation, and displacement, so that every tap or pointing of the user has a visual response.

Tactile feedback information: for a device that supports tactile feedback, the user feels a slight vibration when selecting a control, and by simulating the feel of pressing a physical button, immersive experience is enhanced.

Auditory feedback information: a short and clear sound prompt, such as a tap sound or a confirmation sound effect, and strengthening operation confirmation is particularly important especially when visual attention is distracted.

For example, as shown in FIG. 2, when the target interactive control hot area corresponding to the selection information is recognized as the control hot area 14A, and the target interactive control corresponding to the target interactive control hot area is determined as 13A, the visual indication 15 pointing from the visual interactor 12 to the target interactive control hot area 14A is displayed, and visual feedback information 16 corresponding to the target interactive control 13A is displayed. For example, the visual indication 15 may include the short ray 15A and the virtual cursor 15B. For example, the visual feedback information 16 may be a highlighted iris.

In some embodiments, when the interaction feedback information includes the visual feedback information, outputting the interaction feedback information corresponding to the target interactive control includes:
displaying highlighted visual feedback information on the periphery of the target interactive control; or
displaying dynamically changing visual feedback information inside the target interactive control; or
displaying an animation effect view corresponding to the target interactive control, where the animation effect view includes at least one selected from the group consisting of a scaling effect view, a rotation effect view, and a moving effect view.

For example, the highlighted visual feedback information is displayed on the periphery of the target interactive control. This highlighting may be changing the color, luminance, or transparency of an edge or a surrounding area of the target interactive control, to make it stand out visually so that the user can quickly recognize and confirm an operation focus of the user.

For example, color highlighting: when a target interactive control is selected, its boundary may change from gray to bright blue or green, indicating that the target interactive control has been recognized as a selected state.

For example, luminance increase: luminance of the edge of the target interactive control is increased to make it stand out against darker backgrounds, to provide clear visual differentiation.

For example, transparency changes: the transparency of an unselected control is reduced, and the selected target interactive control is kept opaque, to reinforce the selection of the user through comparison.

For example, in a VR game scenario, a player needs to select a button (the target interactive control) to trigger an event. When a virtual handle of the player points to the button, bright blue light is emitted from an edge of the button, prompting that the player has successfully positioned the target interactive control.

For example, the dynamically changing visual feedback information is displayed inside the target interactive control. For example, when the user correctly makes a gesture to select the target interactive control, a diffuse halo, a blinking icon, or a color gradient may appear inside the target interactive control. Internal feedback provides the user with a direct signal about an operation success, and the feedback is usually more vivid and eye-catching.

For example, for the diffuse halo, after the user performs a confirmation operation, a halo effect that gradually expands and then dissipates may appear inside the target interactive control, similar to ripples spreading on the water surface.

For example, for the blinking icon, at the center or a specific position of the target interactive control, an icon or a symbol may blinking at a specific frequency, indicating that the control has been activated or waiting for further inputs.

For example, for the color gradient, an internal color of the target interactive control may undergo a smooth gradient process. This not only serves as operation feedback, but also increases richness of visual effects.

For example, in an AR painting application, the user may use a gesture to select a color block (the target interactive control) on a virtual canvas. When the user successfully selects the color block, a halo spreading to the outside may appear inside the color block, or a color of the color block may undergo a gradient, indicating that the selection of the user has been confirmed.

For example, the animation effect view corresponding to the target interactive control is displayed. The animation effect may provide more complex feedback and is usually directly related to a function or result of the control.

For example, for the scaling effect view, when the user selects the target interactive control, the entire control or a part of the control may be used for scaling animation. For example, zooming in is performed slightly to emphasis selection, or zooming out is performed to simulate feedback after tapping, thereby improving depth perception of the interaction. For example, the size of the target interactive control may gradually increase from an original size to N times (for example, 1.5 times or 2 twice) of the size, and then gradually decreases to the original size. Alternatively, the target interactive control may be scaled with a more rapid "breathing" effect, that is, quickly zoomed in and zoomed out for several times.

For example, for the rotation effect view, the target interactive control rotates smoothly in response to the interaction. This may not only be used as feedback for confirming the operation, but also be used as a transition effect for switching between different states, to improve the dynamics of the interface. For example, the target interactive control may perform 360-degree rotation around its center point, or perform back-and-forth rotation at a particular angle.

For example, for the moving effect view, the target interactive control may move along a specific path, for example, jump gently or slide to a new position, and this dynamic feedback is applicable to games or navigation applications, to enhance sense of engagement and the exploration desire of the user. For example, the target interactive control may move from an original position to a new position, or move along a specific path and finally return to the original position.

For example, in 3D modeling software, the user may rotate, scale, or move a virtual object (the target interactive control) by using gestures. When the user performs these operations, the selected virtual object immediately displays a corresponding animation effect, such as rotation, zooming in, or movement. This instant animation feedback can help the user better understand the operation result of the user, to improve accuracy and efficiency of the operation.

In some embodiments, the interaction feedback information is a highlighted iris, a position of the highlighted iris is determined by equally proportionally mapping a first distance offset of a center point of the visual indication relative to a center point of the target interactive control hot area into a second distance offset of a center point of the highlighted iris relative to a center point of the target interactive control.

For example, the interaction feedback information (for example, the highlighted visual feedback information) takes the form of a highlighted iris. To achieve a more accurate and dynamic visual effect, a method for equally proportionally mapping an offset between the position of the hot area and the position of the control is used. The following describes the mechanism in detail:

The control hot area is usually a screen area that corresponds to the interactive control and in which the user may perform an interaction operation, and the area may be slightly greater than an actually visible interactive control, making it easier for the user to touch. A coordinate center point of the hot area means position coordinates of a geometric center of the hot area.

The center point of the target interactive control is usually a geometric center position of the target interactive control itself. In many interface designs, to improve user experience, an actual interactive area of the control (the control hot area) is slightly greater than a visually displayed boundary thereof, so that the interaction can be triggered successfully even if the user's touch or mouse click is not completely aligned with the center of the control.

For example, as shown in FIG. 3, when the user performs interaction within the control hot area 14A, the extended reality device records a first offset d1 of the center point **P1** of the virtual cursor 15B in the visual indication 15 relative to the center point O1 of the control hot area 14A. The first offset d1 reflects a deviation of a position P1 that the user is intended to click or touch relative to the center point O1 of the control hot area 14A.

Then, the actually measured first offset d1 is converted into a "second offset d2" according to a specific ratio relationship, that is, the second offset d2 of the center point P2 of the highlighted iris 16 relative to the center point O2 of the target interactive control 13A. This ratio relationship ensures that the highlighting effect not only can accurately reflect the position of the interaction of the user, but also can keep consistency with the size and the layout of the control itself.

The highlighted iris 16 will be positioned at the new coordinate point through the second offset d2 obtained through calculation, and the highlighted iris surrounds the center point O2 of the target interactive control 13A but does not completely overlap the target interactive control 13A, so as to form a dynamic visual feedback effect for accurate positioning following user interaction. This design enables the user to intuitively feel that the operation of the user is accurately captured, enhancing the immediacy and precision of the interaction.

This technology is innovative in terms of visual effects. For example, an iris shift is used to create interesting light and shadow effects, thereby improving aesthetics and interactivity of the overall interface.

For example, it is assumed that the user selects a "save" button located above the user interaction interface by using a virtual laser pointer. A ray of the laser pointer points to a center point of the target interactive control hot area corresponding to the button, but there is a slight offset. The system detects the first offset of an end point of the ray relative to the center point of the target interactive control hot area, and adjusts the first offset proportionally, so that the highlighted iris that appears surrounding the "save" button also displays the corresponding second offset. In this way, even if the hand of the user slightly shakes or is inaccurate, the visual feedback can accurately reflect the operation objective of the user.

Accurately positioning the highlighted iris by mapping the offset between the position of the hot area and the position of the control is a practical and creative interactive design method, which improves interactive experience of the user, and also brings a higher degree of artistic and technological fusion to the interface design.

Step 130: Trigger the target interactive control in response to confirmation information.

For example, although the selection information may indicate that the user is interested in or wants to operate a specific control, it is necessary to wait for explicit confirmation information from the user in order to avoid touch by accidents. The confirmation information may be a continuous gaze, specific gesture completion, screen touch, or confirmation word speaking, or the like of the user.

After receiving the confirmation information, the system immediately executes functions related to the target interactive control, such as opening the menu, playing a video, adjusting a volume, taking a picture of an image, taking a picture of the video, and the like. The triggering process should be instant, to provide smooth user experience.

The entire process aims to simplify interaction between the user and the device, and create a more natural and intuitive human-machine interface by reducing operation burden of the user and improving the efficiency and accuracy of the interaction.

In an interactive design, a manner of processing the selection information and the confirmation information may significantly affect efficiency and experience of the operation of the user. The two types of information may be independent steps in different interaction scenarios, or may be completely simultaneously through a composite operation.

In some interactive designs, the selection information and the confirmation information are designed as two independent steps. This design is mainly applied to a scenario in which high precision or high security is required, such as in an extended reality (XR) device, professional software, or sensitive financial transactions. In this case, the selection information is information in which the user expresses interest in a control or operation, and the confirmation information is information in which the user explicitly indicates that the user wants to perform an operation associated with the control.

For example, using application of the extended reality device as an example, the user may focus lines of sight on a control hot area in virtual space by using the eye tracking technology. In this case, the system recognizes a line-of-sight focus of the user as the selection information, and further selects the interactive control corresponding to the control hot area as the target interactive control, but does not perform any operation immediately. The user then makes a confirmation action, such as nodding, blinking, or a specific gesture, before the system performs the function associated with the target interactive control. The separate operation can prevent misoperation due to accidental or inaccurate line-of-sight movement.

In some interactive designs, many modern mobile devices and applications use a more concise interactive design, to be specific, selection and confirmation are competed at the same time through one operation. Commonly found on mobile phones, tablets, and other touchscreen devices, this manner simplifies user operations and improves the efficiency and intuitiveness of the interaction.

For example, using application of a touchscreen device as an example, on the touchscreen device, the user may complete both selection and confirmation actions simultaneously with a single tap (that is, pressing and immediately lifting a finger). The system detects a position of the tapping operation and considers it as the selection information, and considers it as the confirmation information at the same time, because in this scenario, the tap itself represents the confirmation intention of the user.

For example, touching and holding is generally not considered a single "tap" operation, but in some UI designs, touching and holding a specific control hot area may also be considered as completing both selection and confirmation steps simultaneously. After the user touches and holds a control hot area for a period of time, the system recognizes this operation and triggers a function associated with the target interactive control without requiring the user to perform an additional confirmation operation.

In some advanced interactive designs, the user may perform selection and confirmation operations simultaneously through complex gestures (such as sliding, dragging, and scaling). The system recognizes specific modes and parameters of these gestures, to determine the target interactive control hot area and the confirmation intention of the user, and triggers a correspond function on this basis.

Selecting whether to design the selection information and the confirmation information as separate operations or combining the selection information and the confirmation information into one operation depends on specific application scenarios and user requirements. On an occasion on which quick response and intuitive operation are required, the operation of combining selection and confirmation may provide better user experience. On an occasion on which high precision and secure confirmation are required, it is more suitable to separate the two steps for processing.

In some embodiments, the triggering the target interactive control in response to confirmation information includes:

when the target interactive control corresponds to an image acquisition instruction or a video acquisition instruction, triggering the image acquisition instruction or the video acquisition instruction in response to the confirmation information, to acquire at least one part of the extended reality content.

For example, the user may be currently using a head-mounted extended reality device, where the user allows to the user to interact with the virtual object by using a view control technology. In this case, when the user selects, through lines of sight, and confirms a target interactive control for photographing or video recording, the system starts a corresponding image acquisition instruction. This means that the device will start to capture an image or a video of the real world, and the data may be subsequently combined with the extended reality content, to generate new mixed reality experience.

In addition, this mechanism is not limited to the extended reality device, and may be further applied to a smartphone, a tablet computer, or any other device equipped with a camera and having a sufficient processing capability. For example, in an education application, the user may capture a video of an experimental process by confirming a target interactive control, and then combine the video with preset extended reality content, so as to obtain an additional information layer when observing an actual experimental operation.

For example, after identifying the confirmation information (for example, a specific gesture, line-of-sight retainment, or a speech command) input by the user, the extended reality device triggers a function of the target interactive control. Then, the extended reality device displays, in the three-dimensional environment, a target interaction interface corresponding to the target interactive control. The interface is a result of interaction between the user and the control, and may include a new view, data display, a task procedure, and the like. The new view may be a new menu, a setting panel, a function interface, or the like. The user may perform more operations on the new target interaction interface.

The confirmation information is an explicit indication that the user is intended to perform a specific operation. The information may come from different interaction channels:
Gesture confirmation: the user may use a specific gesture, such as clenching a fist and then opening it, sliding a thumb upward, or knocking with a specific knuckle, as confirmation for the operation on the target interactive control. The extended reality device needs to have a highly accurate gesture recognition algorithm, which can stably recognize these confirmation actions in various ambient illumination and action amplitude differences.

Line-of-sight retainment confirmation: by combining the eye tracking technology, when the extended reality device detects that lines of sight of the user stably retain on a particular target interactive control hot area for duration exceeding a preset time (for example, one to two seconds), this may be considered as a confirmation for the selection of the target interactive control corresponding to the target interactive control hot area. This manner is particularly important in a scenario in which a manual operation is not required. For example, this manner reduces operation burden during information browsing or selection.

Speech command confirmation: the user activates the target interactive control through a clear speech instruction, such as "confirm", "open", or a specific command word. The speech recognition technology needs to have high precision and a good noise suppression capability, to ensure that the intention of the user can still be accurately captured in a complex sound background.

For example, once the confirmation information is recognized, the extended reality device should make an immediate response, which is usually accompanied with a smooth transition animation, for example, a dissolving, sliding, or flying effect, to smoothly transit the current interface to the target interaction interface. These transitions not only beautify the visual experience, but also help the user build cognition of spatial relationships between different interfaces.

For example, a layout of the target interaction interface may be adaptively adjusted according to a function requirement and an available space of the target interaction interlace. For example, when the target interaction interface is a menu interface, the target interaction interface may use a fan-shaped expansion, list scrolling, or mesh layout; or when the target interaction interface is detailed information display, an immersive full-screen view or a pop-up window may be used, to ensure clear display of the information.

For example, content of the target interaction interface is highly related to a previous selection of the user, to ensure that the user feels coherence in the operation process. For example, after "settings" is selected from the main menu, the target interaction interface related to device or application settings will appear.

For example, an instant feedback mechanism, such as an operation prompt, a state update prompt, or continuous visual guidance may be integrated on the target interaction interface, to ensure that the user can also quickly position and understand a next-step operation in the new interface.

All the foregoing technical solutions may be combined in any manner to form optional embodiments of the present disclosure, which are not described in detail one by one herein.

In this embodiment of the present disclosure, at least one interactive control is presented, where the interactive control is configured with a corresponding control hot area; selection information is obtained, a target interactive control hot area corresponding to the selection information is recognized, and a target interactive control corresponding to the target interactive control hot area is determined; and the target interactive control is triggered in response to confirmation information. In this embodiment of the present disclosure, the interactive control and the corresponding control hot area are presented, so that the user can intuitively sense and operate each interactive control, and in cooperation with the configured control hot area, the target interactive control can be quickly selected only by determining, by identifying the selection information, the target interactive control hot area that the user is intended to point to, so as to effectively reduce the difficulty of selecting the interactive control by the user. The confirmation information for the target interactive control hot area is recognized to trigger the target interactive control, so that the user can smoothly perform a next-step operation, thereby improving smoothness and efficiency of the interaction.

To better implement the interaction method in this embodiment of the present disclosure, an embodiment of the present disclosure further provides an interaction apparatus. FIG. 4 is a schematic structural diagram of an interaction apparatus according to an embodiment of the present disclosure. The interaction apparatus 200 may include:
a display unit 210, configured to present at least one interactive control, where the interactive control is configured with a corresponding control hot area;
an interaction unit 220, configured to: obtain selection information, recognize a target interactive control hot area corresponding to the selection information, and determine a target interactive control corresponding to the target interactive control hot area; and
a trigger unit 230, configured to trigger the target interactive control in response to confirmation information.

In some embodiments, the display unit 210 may be configured to: present a plurality of interactive controls, where the plurality of interactive controls respectively correspond to a plurality of control hot areas, and a position relationship between the plurality of interactive controls corresponds to a position relationship between the plurality of control hot areas.

In some embodiments, adjacent control hot areas are seamlessly connected.

In some embodiments, the at least one interactive control has an overlapping area with a control hot area which does not correspond to the at least one interactive control; or the at least one interactive control has no overlapping area with a control hot area which corresponds to the at least one interactive control.

In some embodiments, an area of the control hot area is more than four times larger than an area of the interactive control corresponding to the control hot area.

In some embodiments, a center of the interactive control does not overlap a center of the control hot area corresponding to the interactive control.

In some embodiments, the display unit 210 may be further configured to: display interaction feedback information corresponding to the target interactive control, where a position of the interaction feedback information relative to the target interactive control is determined according to a position of the selection information relative to the target interactive control hot area.

In some embodiments, the position of the interaction feedback information relative to the target interactive control is determined according to a ratio relationship of a distance between the selection information and a center of the target interactive control hot area.

In some embodiments, the display unit 210 may be further configured to: display a visual indication corresponding to the selection information, where the visual indication is used for providing a visual feedback indicating an area range corresponding to the selection information.

In some embodiments, the interaction feedback information is a highlighted iris, a position of the highlighted iris is determined by equally proportionally mapping a first distance offset of a center point of the visual indication relative to a center point of the target interactive control hot area into a second distance offset of a center point of the highlighted iris relative to a center point of the target interactive control.

In some embodiments, a size and/or a position of the control hot area corresponding to each interactive control is determined according to head posture information of a target object.

In some embodiments, a size and/or a position of the control hot area corresponding to each interactive control is determined according to a control quantity of the interactive controls.

In some embodiments, a size and/or a position of the control hot area corresponding to each interactive control is determined according to a historical operation frequency of a target object for each interactive control.

In some embodiments, a position of the control hot area does not change.

In some embodiments, a display position of the interactive control does not change.

In some embodiments, the method is applied to a head-mounted extended reality device, and the display unit 210 may be further configured to: display extended reality content according to a position and/or a posture of the extended reality device.

In some embodiments, the trigger unit 230 may be configured to: when the target interactive control corresponds to an image acquisition instruction or a video acquisition instruction, trigger the image acquisition instruction or the video acquisition instruction in response to the confirmation information, to acquire at least one part of the extended reality content.

In some embodiments, the interaction unit 220 may be configured to: obtain the selection information based on a multimodal input manner, where the multimodal input manner includes at least one selected from the group consisting of: a head posture input manner, an eye movement input manner, a gesture input manner, a speech input manner, and a real interactor input manner.

All or some of the foregoing units in the interaction apparatus 200 may be implemented by using software, hardware, firmware, or a combination thereof. The foregoing units may be embedded in or independent of a processor in a terminal device in the form of hardware, or may be stored in a memory in the terminal device in the form of software, so that the processor invokes execution of operations corresponding to the forgoing units.

The interaction apparatus 200 may be integrated in a terminal or a server that has a memory, that is installed with a processor, and that has an operational capability, or the interaction apparatus 200 is the terminal or the server.

In some embodiments, the present disclosure further provides a terminal device, including a memory and a processor. The memory stores a computer program. The steps of the method embodiments are implemented when the processor executes the computer program.

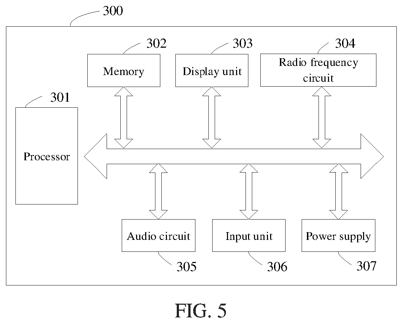

FIG. 5 is a schematic structural diagram of a terminal device according to an embodiment of the present disclosure. The terminal device 300 further includes a processor 301 having one or more processing cores, a memory 302 having one or more computer-readable storage media, and a computer program that is stored on the memory 302 and that can be run on the processor. The processor 301 is electrically connected to the memory 302. A person skilled in the art may understand that the terminal device structure shown in the figure does not constitute any limitation on the terminal device. The terminal device may include more or fewer components than those shown in the figure, or some components may be combined, or a different component deployment may be used.

The processor 301 is a control center of the terminal device 300, and is connected to various parts of the entire terminal device 300 by using various interfaces and lines. The processor 301 performs various functions and data processing of the terminal device 300 by running or loading software programs and/or modules stored in the memory 302 and by invoking data stored in the memory 302, to perform overall monitoring on the terminal device 300.

In this embodiment of the present disclosure, the processor 301 in the terminal device 300 loads, according to the following steps, instructions corresponding to processes of one or more applications, into the memory 302, and the processor 301 runs the applications stored in the memory 302, to implement various functions:
presenting at least one interactive control, where the interactive control is configured with a corresponding control hot area; obtaining selection information, identifying a target interactive control hot area corresponding to the selection information, and determining a target interactive control corresponding to the target interactive control hot area; and triggering the target interactive control in response to confirmation information.

For specific implementation of the foregoing operations, refer to the foregoing embodiments, and details are not described herein again.

In some embodiments, as shown in FIG. 5, the terminal device 300 further includes: a display unit 303, a radio frequency circuit 304, an audio circuit 305, an input unit 306, and a power supply 307. The processor 301 is separately electrically connected to the display unit 303, the radio frequency circuit 304, the audio circuit 305, the input unit 306, and the power supply 307. A person skilled in the art may understand that the terminal device structure shown in FIG. 5 does not constitute any limitation on the terminal device. The terminal may include more or fewer components than those shown in the figure, or some components may be combined, or a different component deployment may be used.

The display unit 303 may be configured to display information input by the user or information provided for the user, and various graphical user interfaces of the computer device, and the graphical user interfaces may include a graphic, a text, an icon, a video, and any combination thereof. The display unit 303 may include a display panel and a touch panel.

The radio frequency circuit 304 may be configured to receive and send a radio frequency signal, to establish wireless communication with a network device or another computer device through wireless communication, and receive and send signals with the network device or another terminal device.

The audio circuit 305 may be configured to provide an audio interface between the user and the terminal device by using a speaker or a microphone

The input unit 306 may be configured to: receive input numeric or character information or object characteristic information (for example, a fingerprint, an iris, or facial information), and generate keyboard, mouse, joystick, optical, or trackball signal inputs related to user settings and function control.

The power supply 307 is configured to supply power to parts of the terminal device 300.

Although not shown in FIG. 5, the terminal device 300 may further include a camera, a wireless fidelity module, a Bluetooth module, an input module, and the like, and details are not described herein.

In some embodiments, the present disclosure further provides a computer-readable storage medium, configured to store a computer program. The computer-readable storage medium may be used in a terminal device or a server, and the computer program enables the terminal device or the server to perform corresponding procedures in the interaction method in embodiments of the present disclosure. For brevity, details are not described herein again.

In some embodiments, the present disclosure further provides a computer program product, where the computer program product includes a computer program, and the computer program is stored in a computer-readable storage medium. A processor of a terminal device reads the computer program from the computer-readable storage medium. The processor executes the computer program, so that the terminal device performs corresponding procedures in the interaction method in the interaction method in embodiments of the present disclosure. For brevity, details are not described herein again.

The present disclosure further provides a computer program, and the computer program is stored in a computer-readable storage medium. A processor of a terminal device reads the computer program from the computer-readable storage medium. The processor executes the computer program, so that the terminal device performs corresponding procedures in the interaction method in the interaction method in embodiments of the present disclosure. For brevity, details are not described herein again.

It should be understood that the processor in this embodiment of the present disclosure may be an integrated circuit chip, and has a signal processing capability. In an implementation process, the steps in the foregoing method embodiments may be completed by using an integrated logic circuit of hardware in the processor or instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The methods, steps, and logic block diagrams disclosed in embodiments of the present disclosure may be implemented or executed. The general-purpose processor may be a microprocessor, or the processor may be any conventional processor or the like. The steps of the methods disclosed with reference to embodiments of the present disclosure may be directly performed by a hardware decoding processor, or may be performed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in embodiments of the present disclosure may be a volatile memory or a nonvolatile memory, or may include both a volatile memory and a nonvolatile memory. The nonvolatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification is intended to include but is not limited to these and a memory of any another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of the present disclosure, the term "module" or "unit" means a computer program with a predetermined function or a part of the computer program, which works together with another related part to implement a predetermined objective, and may be entirely or partially implemented by using software, hardware (for example, a processing circuit or a memory) or a combination thereof. Similarly, one processor (or a plurality of processors or memories) may be configured to implement one or more modules or units. In addition, each module or unit may be a part of an overall module or unit including a function of the module or unit.

In several embodiments provided in the present disclosure, it should be understood that the disclosed system, apparatus, and method may be implemented in another manner. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of the present disclosure may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present disclosure essentially, or the part contributing to the prior art, or some of the technical solutions may be implemented in a form of a software product. The software product is stored in a storage medium, and includes several instructions for instructing a terminal device (which may be a personal computer or a server) to perform all or some of the steps of the methods described in embodiments of the present disclosure. The foregoing storage medium includes various media that can store program code, such as a USB flash drive, a removable hard disk, a ROM, a RAM, a magnetic disk, or an optical disc.

## Claims

1. An interaction method, comprising:
presenting at least one interactive control, the at least one interactive control being configured with a corresponding control hot area;
obtaining selection information, identifying a target interactive control hot area corresponding to the selection information, and determining a target interactive control corresponding to the target interactive control hot area; and
triggering the target interactive control in response to confirmation information.

2. The interaction method according to claim 1, wherein the presenting at least one interactive control, the interactive control being configured with a corresponding control hot area, comprises:
presenting a plurality of interactive controls, wherein the plurality of interactive controls respectively correspond to a plurality of control hot areas, and a position relationship between the plurality of interactive controls corresponds to a position relationship between the plurality of control hot areas.

3. The interaction method according to claim 2, wherein adjacent control hot areas are seamlessly connected; optionally,
the at least one interactive control has an overlapping area with a control hot area which does not correspond to the at least one interactive control; or
the at least one interactive control has no overlapping area with a control hot area which corresponds to the at least one interactive control.

4. The interaction method according to claim 1, wherein an area of the control hot area is more than four times larger than an area of the interactive control corresponding to the control hot area; optionally,
a center of the interactive control does not overlap a center of the control hot area corresponding to the interactive control.

5. The interaction method according to one of the claims 1 to 4, further comprising:
displaying interaction feedback information corresponding to the target interactive control, wherein a position of the interaction feedback information relative to the target interactive control is determined according to a position of the selection information relative to the target interactive control hot area.

6. The interaction method according to claim 5, wherein the position of the interaction feedback information relative to the target interactive control is determined according to a ratio relationship of a distance between the selection information and a center of the target interactive control hot area.

7. The interaction method according to claim 6, further comprising:
displaying a visual indication corresponding to the selection information, wherein the visual indication is used for providing a visual feedback indicating an area range corresponding to the selection information.

8. The interaction method according to claim 7, wherein the interaction feedback information is a highlighted iris, a position of the highlighted iris is determined by equally proportionally mapping a first distance offset of a center point of the visual indication relative to a center point of the target interactive control hot area into a second distance offset of a center point of the highlighted iris relative to a center point of the target interactive control.

9. The interaction method according to one of the claims 1 to 8, wherein a size and/or a position of a control hot area corresponding to each interactive control is determined according to head posture information of a target object; optionally,
a size and/or a position of a control hot area corresponding to each interactive control is determined according to a control quantity of the interactive controls; optionally,
a size and/or a position of a control hot area corresponding to each interactive control is determined according to a historical operation frequency of a target object for each interactive control.

10. The interaction method according to one of the claim 1 to 8, wherein a position of the control hot area does not change; optionally,
a display position of the interactive control does not change.

11. The interaction method according to claim 10, wherein the interaction method is applied to a head-mounted extended reality device, and the method further comprises:
displaying extended reality content according to a position and/or a posture of the extended reality device,
wherein the triggering the target interactive control in response to confirmation information comprises:
when the target interactive control corresponds to an image acquisition instruction or a video acquisition instruction, triggering the image acquisition instruction or the video acquisition instruction in response to the confirmation information, to acquire at least one part of the extended reality content.

12. The interaction method according to one of the claims 1 to 11, wherein the obtaining selection information comprises:
obtaining the selection information based on a multimodal input manner,
wherein the multimodal input manner comprises at least one selected from the group consisting of: a head posture input manner, an eye movement input manner, a gesture input manner, a speech input manner, and a real interactor input manner.

13. An interaction apparatus, comprising:
a display unit, configured to present at least one interactive control, wherein the at least one interactive control is configured with a corresponding control hot area;
an interaction unit, configured to obtain selection information, identify a target interactive control hot area corresponding to the selection information, and determine a target interactive control corresponding to the target interactive control hot area; and
a trigger unit, configured to trigger the target interactive control in response to confirmation information.

14. A computer-readable storage medium, wherein the computer-readable storage medium stores a computer program, and when the computer program run on a computer, the steps of the interaction method according to any one of claims 1 to 12 are carried out.

15. A terminal device, comprising a processor and a memory, wherein the memory stores a computer program, and when the processor invokes the computer program stored in the memory, the steps of the interaction method according to any one of claims 1 to 12 are carried out.
